# EUROPÄISCHE PATENTSCHRIFT

(11) **EP 2 225 582 B1**
(45) Veröffentlichungstag und Bekanntmachung des Hinweises auf die Patenterteilung: **05.09.2012**
(21) Anmeldenummer: 08862390.5
(22) Anmeldetag: 21.10.2008
(51) Int. Cl.: G01S 7/03, H01Q 25/00

(54) **MONOSTATISCHER MEHRSTRAHL-RADARSENSOR, SOWIE VERFAHREN**
MONOSTATIC MULTIBEAM RADAR SENSOR, AND METHOD THEREFOR
DÉTECTEUR RADAR MONOSTATIQUE MULTIFAISCEAU, ET PROCÉDÉ

(30) Priorität: 17.12.2007 DE 102007060769
(43) Veröffentlichungstag der Anmeldung: 08.09.2010
(73) Patentinhaber: Robert Bosch GmbH, 70442 Stuttgart (DE)
(72) Erfinder: BINZER, Thomas, 70565 Stuttgart (DE); STEINBUCH, Dirk, 71299 Wimsheim (DE)
(86) Internationale Anmeldenummer: PCT/EP2008/064167
(87) Internationale Veröffentlichungsnummer: WO 2009/077236

(56) Entgegenhaltungen:
- EP-A- 1 351 333
- WO-A-2006/029926
- DE-A1- 19 648 203
- US-A1- 2003 112 172
- US-A1- 2007 182 619

## Beschreibung

### Stand der Technik

Die Erfindung geht aus von einem monostatischem Mehrstrahl-Radarsensor gemäß dem Oberbegriff des Anspruchs 1. Gegenstand der Erfindung ist auch ein Verfahren zum Betreiben eines solchen Radarsensors.

Aus der WO 2006/029926 A1 ist ein monostatischer Mehrstrahl-Radarsensor für Kraftfahrzeuge bekannt, bestehend aus einer Gruppenantenne, einer planaren Linse mit mehren Eingängen und einem homodynen Mischersystem, welches mehrere Transfermischer aufweist, die parallel an die Eingänge der Linse angeschlossen sind. Die Linse bewirkt eine Strahlbündelung sowohl im Sende- als auch im Empfangsbetrieb. Mit einem solchen Radarsensor ist eine Parallelverarbeitung der Signale mehrerer Radarstrahlen möglich. Die Transfermischer lassen sich auf engem Raum auf einer Platine anordnen.

In verschiedenen Applikationen, z. B. bei ACC (Adaptive Control) ist es erforderlich, dass Sende- und Empfangscharakteristik unterschiedlich sind. Dies wurde bisher durch bistatische Antennensysteme erreicht, z. B. bei einem DBF (Digital Beamforming)-Radar mit einer weniger bündelnden Sendeantenne und einer stark bündelnden Empfangsantenne oder mit einem Gemischtsystem, d. h. einem Antennensystem zum Senden und Empfangen von Radarsignalen und einem weiteren Antennensystem nur zum Empfangen von Radarsignalen, wie in der DE 196 48 203 C2 beschrieben.

### Offenbarung der Erfindung

Aus der US 2007/182619 A1 ist ein Radarsensor, insbesondere für Kraftfahrzeuge, mit einer Gruppenantenne und einer Mischereinrichtung bekannt, bei der die Mischereinrichtung parallel an mehrere Antennenelemente angeschlossen ist, wobei der Mischer sowohl transferierend als auch isolierend geschaltet werden kann.

Aufgabe der Erfindung ist es, eine monostatischen Mehrstrahlenradarsensor und ein Verfahren zu seinem Betrieb bereitzustellen, bei dem sich die Richtcharakteristiken von Sende- und Empfangsbetrieb unterschiedlich einstellen lassen. Diese Aufgabe wird durch einen monostatischen Mehrstrahlenradarsensor gemäß Anspruch 1 und einem Verfahren gemäß Anspruch 6 gelöst. Bevorzugte Weiterbildungen sind in den abhängigen Ansprüchen angegeben.

### Vorteile der Erfindung

Mit dem monostatischen Mehrstrahlradarsensor gemäß Anspruch 1, bei der eine Gruppenantenne und ein Mischersystem vorgesehen ist, bestehend aus mehreren Transfermischern, die an Antennenelemente der Gruppenantenne angeschlossen sind, und zwar derart, dass eine erste Anzahl Transfermischer isoliert geschaltet ist und eine zweite Anzahl der Transfermischer transferierend geschaltet ist, lassen sich bei einem monostatischem System, also bei einer gemeinsamen Antenne für Sende- und Empfangsbetrieb, unterschiedliche Richtcharakteristiken für den Sende- und Empfangsbetrieb einstellen bei sehr geringem Platzbedarf, z. B. einer Verringerung der Antennenfläche um 50% gegenüber einem bistatischen System. Die Erfindung geht dabei von der Erkenntnis aus, dass im Empfangsbetrieb auch isolierend geschaltete Transfermischer Ausgangssignale liefern, die sich durch phasen- und amplitudenrichtiges Summieren auswerten lassen, um z.B. eine digitale Strahlformung (DFB) zu erzielen. Im Empfangsbetrieb steht somit die gesamte Antennenapertur zur Verfügung und die Strahlkeulen sind entsprechend schmal, was zur Erhöhung der Auflösung, insbesondere in fahrspurrelevanten Bereichen für LRR (Longrange Radar) vorteilhaft ist. Im Sendebetrieb steht durch die insbesondere äußeren, isolierenden Mischer nicht die gesamte Apertur zur Verfügung, das Richtdiagramm wird entsprechend breit. Das Oszillator- bzw. Sendesignal kann die transferierend geschalteten Mischer passieren, während es über die isolierend geschalteten Mischer um 25 bis 30 dB gedämpft wird und zur Richtwirkung nicht mehr wesentlich beiträgt. Die Apertur halbiert sich damit effektiv, womit sich der Erfassungsbereich im Sendefall verdoppelt.

Vorteilhaft ist es bei einem matrixartigen Aufbau der Gruppenantenne die Transfermischer, die an die äußeren Antennenelemente angeschlossen sind, isolierend zu schalten.

Um im Sendebetrieb das Richtdiagramm breiter oder schmäler auszulegen, können weitere Transfermischer entweder isolierend oder transferierend ausgelegt werden.

Vorteilhaft ist es, mehrere Spalten von Antennenelementen der matrixartigen Gruppenantenne auf jeweils einen Transfermischer zu führen. Dies spart Fläche für die Transfermischer, ohne wesentliche Einschränkung der Auflösung. Auch die Anordnung von jeweils zwei Transfermischern gemeinsam auf einem Chip, die jeweils beide isolierend oder transferierend geschaltet sind, spart Fläche und Verdrahtungsaufwand.

### Beschreibung der Zeichnung

Anhand der Zeichnung werden Ausführungsbeispiele der Erfindung näher erläutert. Es zeigt:

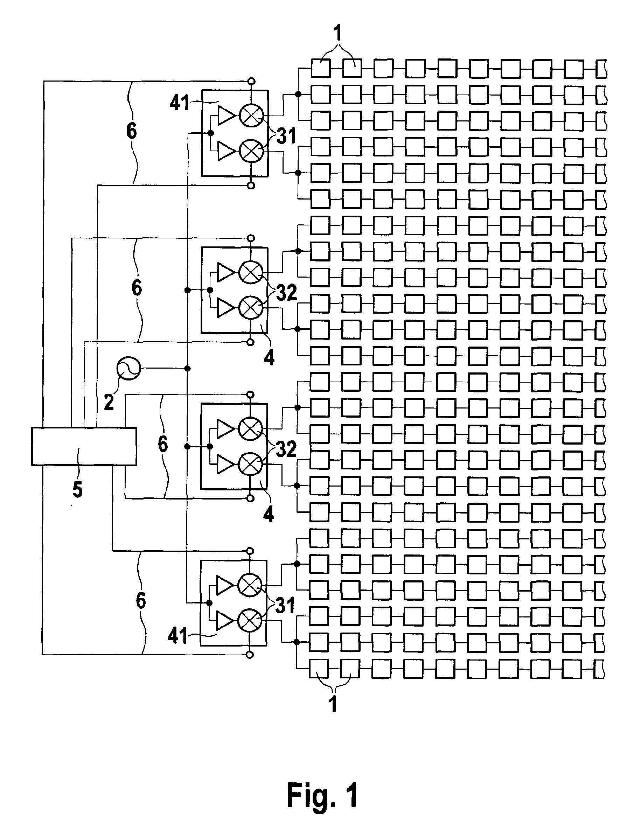

- Figur 1: eine schematische Darstellung eines Antennenerrays mit angeschalteten Mischern und Hochfrequenzquelle.

### Ausführungsformen der Erfindung

Bei der Erfindung ist gemäß Figur 1 eine matrixartige Gruppenantenne mit Antennenelementen 1 für den monostatischen Betrieb vorgesehen. Eine Hochfrequenzquelle 2 von beispielsweise 77 GHz wird über Mischer 31, 32 an die Antennenelemente 1 geschaltet. Im gezeigten Ausführungsbeispiel sind jeweils drei Spalten von Antennenelementen 1 zusammengefasst an einen Mischer 31 bzw. 32 angeschlossen. Die Mischer 31 bzw. 32 können als MMICs realisiert sein. Jeweils zwei Mischer 31 bzw. 32 befinden sich zusammen auf einem Chip 4 bzw. 41. Um für den Sendebetrieb eine andere Richtcharakteristik zu erzeugen als für den Empfangsbetrieb, sind die jeweils äußeren zwei Mischer 31 auf dem Chip 41 isolierend geschaltet und die vier inneren Mischer 32 auf dem Chip 4 transferierend geschaltet.

Im Empfangsbetrieb liefert sowohl ein isolierender, wie auch ein transferierender Mischer identische Ausgangssignale. Wird durch digitales Beamforming (phasenund amplitudenrichtiges Summieren der acht Ausgangssignale) ein Richtdiagramm erzeugt, steht die gesamte Antennenapertur zur Verfügung und das Empfangsdiagramm ist entsprechend schmal. Im Sendebetrieb steht durch die insbesondere äußeren, isolierenden Mischer 31 nicht die gesamte Apertur zur Verfügung, das Richtdiagramm wird entsprechend breit. Das Oszillator-, bzw. Sendesignal der Hochfrequenzquelle 2 kann die transferierenden Mischer 32 passieren, während es über die isolierenden Mischer 31 um 25 bis 30 dB gedämpft wird und zur Richtwegung nicht wesentlich beiträgt. Die Apertur halbiert sich damit effektiv, womit sich der Erfassungsbereich im Sendebetrieb verdoppelt.

In anderen Ausprägungen können weitere Mischer entweder isolierend oder transferierend ausgelegt werden, um das Richtdiagramm bei Sendebetrieb breiter oder schmäler auszulegen.

Bei Verwendung einer homodynen Mischung, wie etwa bei der WO 2006/029926 A1 wird von dem Signal der Hochfrequenzquelle 2, die das zu sendende Signal erzeugt, ein Teil abgezweigt und als Lokaloszillatorsignal verwendet, so dass das gesendete Signal und das Signal des lokalen Oszillators die gleiche Frequenz haben. Die Zwischenfrequenz entspricht dann dem Frequenzunterschied zwischen dem Lokaloszillatorsignal und dem empfangenen Signal und ist bei einem Dopplerradar von der Dopplerverschiebung abhängig. Bei einem FMCW-Radar wird die Frequenz des gesendeten Signals und folglich auch die Lokaloszillatorfrequenz rampenförmig moduliert. Die Zwischenfrequenz ist dann auch von der Signallaufzeit und damit vom Abstand des georteten Objekts abhängig und liegt in einer Größenordnung von 0 bis wenige 100 kHz.

In einer Auswerteeinrichtung 5 werden die gemischten verschiedenen Empfangssignale (Zwischenfrequenzsignale) der Mischer 31 und 32 an ihren Ausgängen 6 zeitsynchron abgetastet (digitalisiert) und einer bekannten digitalen Strahlformung unterzogen. Aufgrund der festen Phasen- und Amplitudenbeziehung der einzelnen Empfangssignale in Azimut, kann neben der Entfernung auch die Winkelinformation von Radarzielen extrahiert werden.

## Patentansprüche

1. Monostatischer Mehrstrahlradarsensor insbesondere für Kraftfahrzeuge mit einer Gruppenantenne, einer Hochfrequenzquelle (2) und einem Mischersystem, bestehend aus mehreren Transfermischern (31, 32), die an Antennenelemente (1) der Gruppenantenne und an die Hochfrequenzquelle (2) angeschlossen sind,
**dadurch gekennzeichnet, dass**
zur Realisierung unterschiedlicher Richtcharakteristiken für den Sende- und Empfangsbetrieb eine erste Anzahl der Transfermischer (31) isolierend und eine zweite Anzahl der Transfermischer (32) transferierend geschaltet ist, wobei im Sendebetrieb ein Sendesignal der Hochfrequenzquelle (2) von den isolierend geschalteten Transfermischern (31) um 25 bis 30 dB gedämpft und von den transferierend geschalteten Transfermischern (32) durchgelassen wird, und wobei im Empfangsbetrieb identische Ausgangssignale von den isolierend geschalteten Transfermischern (31) und von den transferierend geschalteten Transfermischern (32) geliefert werden.

2. Radarsensor nach Anspruch 1, **dadurch gekennzeichnet, dass** bei einem matrixartigen Aufbau der Gruppenantenne die Transfermischer (31), die an die äußeren Antennenelemente (1) bzw. Gruppen von äußeren Antennenelementen der matrixartigen Gruppenantenne angeschlossen sind, isolierend geschaltet sind.

3. Radarsensor nach Anspruch 1 oder 2, **dadurch gekennzeichnet, dass** empfangsseitig eine digitale Strahlformung vorgesehen ist.

4. Radarsensor nach einem der Ansprüche 1 bis 3, **dadurch gekennzeichnet, dass** mehrere Spalten von Antennenelementen (1) der matrixartigen Gruppenantenne auf jeweils einen Transfermischer (31, 32) geführt sind.

5. Radarsensor nach einem der Ansprüche 1 bis 4, **dadurch gekennzeichnet, dass** jeweils zwei Transfermischer (31, 32) gemeinsam auf einem Chip (4, 41) angeordnet sind und jeweils beide dieser Transfermischer (31, 32) isolierend oder transferierend geschaltet sind.

6. Verfahren zum Betreiben eines monostatischen Mehrstrahlradarsensors, insbesondere für Kraftfahrzeuge, mit einer Gruppenantenne, einer Hochfrequenzquelle (2) und einem Mischersystem, bestehend aus mehreren Transfermischern (31, 32), die an Antennenelemente (1) der Gruppenantenne und an die Hochfrequenzquelle (2) angeschlossen sind,
**dadurch gekennzeichnet, dass**
zur Realisierung unterschiedlicher Richtcharakteristiken für den Sende- und Empfangsbetrieb eine erste Anzahl der Transfermischer (31) isolierend und eine zweite Anzahl der Transfermischer (32) transferierend geschaltet werden, wobei im Sendebetrieb ein Sendesignal der Hochfrequenzquelle (2) von den isolierend geschalteten Transfermischern (31) um 25 bis 30 dB gedämpft und von den transferierend geschalteten Transfermischern (32) durchgelassen wird, und wobei im Empfangsbetrieb identische Ausgangssignale von den isolierend geschalteten Transfermischern (31) und von den transferierend geschalteten Transfermischern (32) geliefert werden.

7. Verfahren nach Anspruch 6, **dadurch gekennzeichnet, dass** im Empfangsbetrieb sowohl die Ausgangssignale der transferierend geschalteten Transfermischer (32) als auch die Ausgangssignale der isolierend geschalten Transfermischer (31) zeitsynchron abgetastet und einer digitalen Strahlformung unterzogen werden.

## Claims

1. Monostatic multibeam radar sensor, in particular for motor vehicles, having a group antenna, a radio frequency source (2) and a mixer system, composed of a plurality of transfer mixers (31, 32) which are connected to antenna elements (1) of the group antenna and to the radio frequency source (2),
**characterized in that**
in order to implement different directional characteristics for the transmission mode and reception mode a first number of the transfer mixers (31) is switched to an isolating setting and a second number of the transfer mixers (32) is switched to a transferring setting, wherein in the transmission mode a transmission signal of the radio frequency source (2) is damped by 25 to 30 dB by the transfer mixers (31) which are switched to an isolating setting, and said transmission signal is transmitted by the transfer mixers (32) which are switched to a transferring setting, and wherein in the reception mode identical output signals are supplied by the transfer mixers (31) which are switched to an isolating setting and by the transfer mixers (32) which are switched to a transferring setting.

2. Radar sensor according to Claim 1, **characterized in that** in the case of a matrix-like structure of the group antenna the transfer mixers (31), which are connected to the external antenna elements (1) or groups of external antenna elements of the matrix-like group antenna, are switched to an isolating setting.

3. Radar sensor according to Claim 1 or 2, **characterized in that** digital beam shaping is provided at the reception end.

4. Radar sensor according to one of Claims 1 to 3, **characterized in that** a plurality of columns of antenna elements (1) of the matrix-like group antenna are led to one transfer mixer (31, 32) in each case.

5. Radar sensor according to one of Claims 1 to 4, **characterized in that** in each case two transfer mixers (31, 32) are arranged together on a chip (4, 41) and in each case both of these transfer mixers (31, 32) are switched to an isolating setting or transferring setting.

6. Method for operating a monostatic multibeam radar sensor, in particular for motor vehicles, having a group antenna, a radio frequency source (2) and a mixer system, composed of a plurality of transfer mixers (31, 32) which are connected to antenna elements (1) of the group antenna and to the radio frequency source (2),
**characterized in that**
in order to implement different directional characteristics for the transmission mode and reception mode a first number of the transfer mixers (31) is switched to an isolating setting and a second number of the transfer mixers (32) is switched to a transferring setting, wherein in the transmission mode a transmission signal of the radio frequency source (2) is damped by 25 to 30 dB by the transfer mixers (31) which are switched to an isolating setting, and said transmission signal is transmitted by the transfer mixers (32) which are switched to a transferring setting, and wherein in the reception mode identical output signals are supplied by the transfer mixers (31) which are switched to an isolating setting and by the transfer mixers (32) which are switched to a transferring setting.

7. Method according to Claim 6, **characterized in that** in the reception mode both the output signals of the transfer mixers (32) which are switched to a transferring setting and the output signals of the transfer mixers (31) which are switched to an isolating setting are sampled synchronously in time and subjected to digital beam shaping.

## Revendications

1. Détecteur radar monostatique multifaisceaux, notamment pour véhicules automobiles, avec une antenne groupée, une source haute fréquence (2) et un système de mélange, composé de plusieurs mélangeurs de transfert (31, 32) connectés aux éléments d'antenne (1) de l'antenne groupée et à la source haute fréquence (2), **caractérisé en ce qu'**un premier nombre de mélangeurs de transfert (31) est connecté de façon isolante pour obtenir différentes caractéristiques de direction pour le fonctionnement en émission et réception et **en ce qu'**un deuxième nombre de mélangeurs de transfert (32) est connecté avec des propriétés de transfert, un signal d'émission de la source haute fréquence (2) étant atténué de 25 à 30 dB par les mélangeurs de transfert (31) connectés de façon isolante dans le cadre du fonctionnement en émission et les mélangeurs de transfert (32) connectés avec des propriétés de transfert autorisant leur passage et des signaux de sortie identiques étant transmis par les mélangeurs de transfert (31) connectés de façon isolante et par les mélangeurs de transfert (32) connectés avec des propriétés de transfert dans le cadre d'un fonctionnement en réception.

2. Détecteur radar selon la revendication 1, **caractérisé en ce qu'**en cas de structure matricielle de l'antenne groupée, les mélangeurs de transfert (31) connectés aux éléments d'antenne (1) extérieurs et/ou aux groupes d'éléments d'antenne extérieurs sont connectés de façon isolante à l'antenne groupée matricielle.

3. Détecteur radar selon la revendication 1 ou 2, **caractérisé en ce qu'**une formation de faisceau numérique est prévue du côté de la réception.

4. Détecteur radar selon l'une quelconque des revendications 1 à 3, **caractérisé en ce que** plusieurs fentes des éléments d'antenne (1) de l'antenne groupée matricielle conduisent respectivement à un mélangeur de transfert (31, 32).

5. Détecteur radar selon l'une quelconque des revendications 1 à 4, **caractérisé en ce que** deux mélangeurs de transfert (31, 32) sont respectivement disposés ensemble sur une puce (4, 41) et **en ce que** ces deux mélangeurs de transfert (31, 32) sont respectivement connectés de façon isolante ou avec des propriétés de transfert.

6. Procédé servant à faire fonctionner un détecteur radar monostatique multifaisceaux, notamment pour véhicules automobiles, avec une antenne groupée, une source haute fréquence (2) et un système de mélange, composé de plusieurs mélangeurs de transfert (31, 32) connectés aux éléments d'antenne (1) de l'antenne groupée et à la source haute fréquence (2), **caractérisé en ce qu'**un premier nombre de mélangeurs de transfert (31) est connecté de façon isolante pour obtenir différentes caractéristiques de direction pour le fonctionnement en émission et réception et **en ce qu'**un deuxième nombre de mélangeurs de transfert (32) est connecté avec des propriétés de transfert, un signal d'émission de la source haute fréquence (2) étant atténué de 25 à 30 dB par les mélangeurs de transfert (31) connectés de façon isolante dans le cadre du fonctionnement en émission et les mélangeurs de transfert (32) connectés avec des propriétés de transfert autorisant leur passage et des signaux de sortie identiques étant transmis par les mélangeurs de transfert (31) connectés de façon isolante et par les mélangeurs de transfert (32) connectés avec des propriétés de transfert dans le cadre d'un fonctionnement en réception.

7. Procédé selon la revendication 6, **caractérisé en ce que** dans le cadre d'un fonctionnement en réception, tant les signaux de sortie des mélangeurs de transfert (32) connectés avec des propriétés de transfert que les signaux de sortie des mélangeurs de transfert (31) connectés de façon isolante sont analysés et soumis à la formation de faisceaux numériques.
